# DEMANDE DE BREVET EUROPEEN

(11) **EP 3 744 681 A1**
(43) Date de publication de la demande: **02.12.2020**
(21) Numéro de dépôt: 20177187.0
(22) Date de dépôt: 28.05.2020
(51) Int. Cl.: C01B 3/06

(54) **PRODUCTION D'HYDROGENE A PARTIR DE BOROHYDRURE OU ALUMINOHYDRURE SOLIDE A BORD D'UN ENGIN SOUS-MARIN**

(30) Priorité: 28.05.2019 FR 1905619
(71) Demandeur: Naval Group, 75015 Paris (FR)
(72) Inventeur: LE CARFF, Franck, 56311 Lorient cedex (FR); BENAC, Stéphane, 56311 Lorient cedex (FR)
(74) Mandataire: Lavoix

(57) **Abrégé**

La présente invention concerne un procédé de production d'hydrogène à partir d'un borohydrure ou d'un aluminohydrure XH₄ sous forme solide à bord d'un engin sous-marin, et les systèmes de propulsion correspondants.

## Description

La présente demande concerne le domaine de la propulsion d'engins sous-marins, et notamment la propulsion anaérobie (Air Independent Propulsion - AIP) à pile à combustible, notamment à pile à hydrogène.

La propulsion anaérobie permet d'accroître significativement l'autonomie en plongée des engins sous-marins, et de limiter les retours réguliers vers la surface pour faire tourner les moteurs afin de recharger les batteries utilisées en immersion, ceci représentant des périodes d'indiscrétion indésirable.

La capacité à stocker un maximum d'hydrogène dans un volume limité est un enjeu fondamental des systèmes de production d'énergie AIP à pile à combustible.

Les borohydrures ou aluminohydrures (par exemple KBH₄, LiBH₄, KAIH₄, NaAIH₄, LiAIH₄ ou NaBH₄) sont un moyen de stockage et de production d'hydrogène par hydrolyse. Par la suite ces borohydrures ou l'aluminohydrures sont notés XH₄.

Les systèmes AIP usuels au XH₄ sont basés sur un stockage aqueux. Ainsi, WO 2017145068 propose un système d'AIP avec pile à combustible type PAFC (pile à combustible à acide phosphorique), et un système de production d'hydrogène à base de solution de NaBH₄ sous forme liquide. Le NaBH₄ est ainsi stocké sous forme d'une solution aqueuse.

Le stockage de solutions de XH₄ présente cependant des désavantages techniques importants, tels que le poids, l'encombrement et la stabilité des solutions.

Il est donc nécessaire de mettre à disposition un moyen de stockage alternatif embarqué. La présente invention propose le stockage embarqué du XH₄ sous forme solide.

Selon un premier objet, la présente invention concerne un procédé de propulsion anaérobie (AIP) d'un engin sous-marin par production d'hydrogène (H₂) par hydrolyse de XH₄, où X est choisi parmi KB, LiB, KAI, NaAI, LiAI ou NaB,
caractérisé en ce que la réserve de borohydrure ou d'aluminohydrure(XH₄) embarquée est stockée sous forme solide.

Sans être exhaustif, la présente invention permet de résoudre entre autres, les problèmes inhérents au stockage aqueux du XH₄ :
- En absence d'eau, le XH₄ solide ne produit pas d'hydrogène ce qui permet de contrôler la production d'hydrogène pendant la mission du navire ;
- Suppression des dégagements d'hydrogène indésirables lorsque la production d'hydrogène n'est pas nécessaire ;
- Suppression des problèmes de cristallisation XH₄ non maîtrisée dans les réservoirs ;
- Augmentation de la quantité de XH₄ embarqué par unité de volume (la fraction massique d'hydrogène du XH₄ solide étant supérieure à une solution de XH₄ concentrée).

En particulier, le procédé peut être mis en œuvre selon l'un des deux modes de réalisation alternatifs suivants :
Selon un premier mode de réalisation, ledit procédé comprend l'injection du XH₄ solide dans le réacteur d'hydrolyse.

Selon ce premier mode de réalisation, le XH₄ solide est convoyé jusqu'au réacteur puis injecté dans le réacteur.

Selon un mode de réalisation alternatif, ledit procédé comprend :
- l'étape de dissolution du XH₄ solide dans une solution aqueuse de dissolution ; et
- l'étape d'injection de la solution aqueuse de XH₄ ainsi obtenue dans le réacteur d'hydrolyse.

Dans ce mode de réalisation alternatif, ledit procédé comprend :
- la dissolution dans le ou les réservoirs de stockage de XH₄ solide, et/ou
- le convoyage de XH₄ solide vers un caisson de dissolution et la dissolution dans le dit caisson de dissolution,
la dissolution étant opérée par ajout d'une solution aqueuse de dissolution.

Selon l'un ou l'autre des modes alternatifs de réalisation, le XH₄ peut en particulier être stocké sous forme de comprimés (« caplets »), granulés (« pellets ») ou poudre.

Le procédé selon l'invention permet notamment de créer une solution aqueuse de XH₄ à bord au fur et à mesure de l'alimentation du réacteur de production d'hydrogène.

Le fractionnement de la mise en solution permet de dédier un volume limité à la mise en solution du XH₄ et d'en diminuer la concentration pour rejeter tout risque de cristallisation du XH4 en solution quelles que soient les températures dans lesquelles le navire évolue.

On entend par « embarqué », le stockage du XH₄ à bord d'un engin sous-marin, impliquant généralement une double limitation, d'ordre spatial (encombrement réduit) et énergétique (consommation restreinte).

Les termes « réserve » et « stockage » sont ici utilisés de façon interchangeable et désignent le stock de XH₄, dans un ou plusieurs containers.

On entend par « engin sous-marin » notamment un sous-marin proprement dit, ou tout autre équipement ou véhicule sous-marin nécessitant pour sa propulsion ou son fonctionnement une source d'hydrogène alimentée par XH₄.

Le terme « réacteur d'hydrolyse » désigne l'appareil généralement constitué d'au moins un récipient et un moyen d'agitation dans lequel est conduite la réaction entre l'eau et XH₄, conduisant à la formation d'hydrogène, selon la réaction :

XH₄ + 2 H₂O -> 4 H₂ + XO₂

Où X est défini comme ci-avant.

On entend par « solution aqueuse de dissolution » une solution à base d'eau utilisée pour dissoudre le XH₄ solide, de façon à former une solution aqueuse de XH₄. Ladite solution aqueuse de dissolution contient essentiellement de l'eau mais peut également contenir un ou plusieurs autres agents dissous, tels que des bases NaOH ou KOH aqueuses qui permettent la stabilisation de la solution.

Le terme « caisson de dissolution » désigne l'appareil généralement constitué d'au moins un récipient et d'un moyen d'agitation, dans lequel on peut réaliser le mélange de XH₄ dans l'eau, le mélange pouvant être réalisé de façon continue.

Selon l'un ou l'autre des modes de réalisation, le XH₄ peut avantageusement être stabilisé par une ou plusieurs bases.

Typiquement, la ou les bases peuvent présentes dans le XH₄ solide, dans la solution aqueuse de dissolution, et/ou dans la solution aqueuse de XH₄.

Selon un mode de réalisation, ledit procédé comprend l'étape initiale d'amorçage par dissolution de XBH₄ solide par une solution aqueuse d'amorçage.

Selon un mode de réalisation, ledit procédé comprend en outre le recyclage de l'eau en excès pour l'alimentation de ladite solution aqueuse de dissolution.

On entend par eau en excès l'eau n'ayant pas réagi lors de l'hydrolyse, disponible à l'issue de la phase de production de H₂, qui peut être soutirée en sortie du réacteur.

Selon un autre objet, la présente invention concerne également un système de propulsion anaérobie embarqué d'un engin sous-marin par production d'hydrogène à partir de XH₄ solide comprenant :
- un réacteur 10 d'hydrolyse permettant la production d'hydrogène 6 à partir de XH₄,
- au moins un moyen 4 d'introduction de XH₄ dans ledit système de production d'hydrogène ;
- au moins un moyen 9 de transfert de l'hydrogène formé 6 vers une pile à combustible ;
caractérisé en ce qu'il comprend au moins un réservoir de stockage 1 de XH₄ solide 2.

Selon un mode de réalisation, le système comprend en outre :
- au moins un moyen d'ajout d'eau 12 au XH₄ solide 2,
- au moins un caisson de dissolution 11 permettant la dissolution de XH₄ solide 2 dans une solution de dissolution 7;
- au moins un moyen 4', 4" de circulation forcée de la solution de XH₄ entre le réservoir de stockage 1 de XH₄ solide et le caisson de dissolution 11,
- au moins un moyen de transfert 4 de ladite solution de XH₄ ainsi formée vers le réacteur d'hydrolyse 10.

Le terme « circulation » s'entend ici pour la circulation et recirculation entre le réservoir de stockage 1 de XH₄ solide et le caisson de dissolution 11, et inversement.

Selon un mode de réalisation, le système comprenant en outre :
- un réservoir d'une solution aqueuse d'amorçage 12' en amont d'une arrivée d'eau 12 .

Les deux modes de réalisation précités peuvent correspondre au procédé de l'invention selon le second mode de réalisation.

Selon un mode de réalisation, le système comprenant des moyens de recyclage 14 de l'eau restante vers l'arrivée d'eau.

L'invention sera mieux comprise à la lecture de la description qui va suivre, donnée uniquement à titre d'exemple et faite en se référant aux dessins annexés, sur lesquels :
[Fig 1] la figure 1 représente de façon schématique un système selon l'invention, permettant la mise en oeuvre du procédé selon le premier mode de réalisation.
[Fig 2] la figure 2 représente de façon schématique un système selon l'invention, permettant la mise en oeuvre du procédé selon le second mode de réalisation.

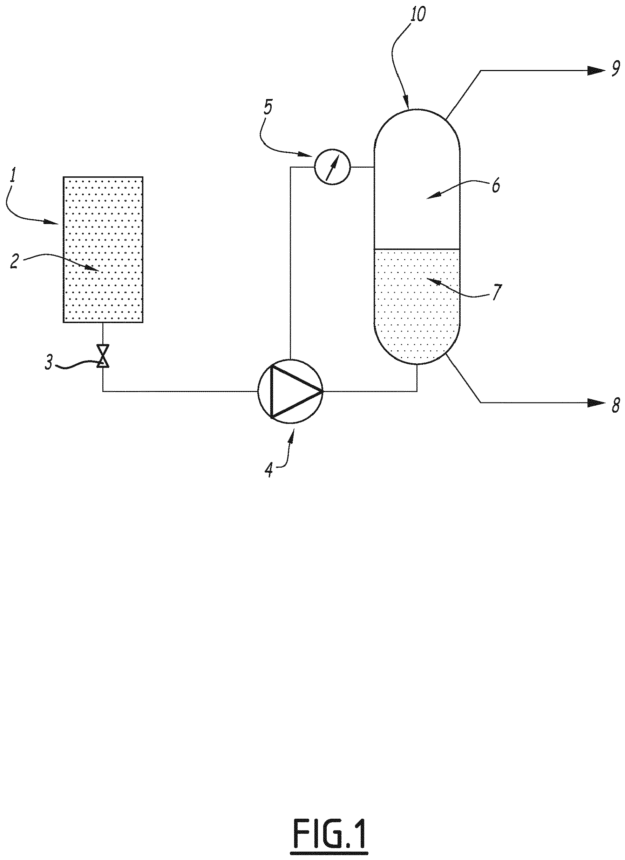

On a en effet illustré sur la figure 1 un système de production d'hydrogène à partir de NaBH₄ solide embarqué comprenant :
un réservoir désigné par la référence générale 1 de XH₄ solide désigné par la référence générale 2, ledit XH₄ solide 2 étant transféré de façon classique par un système de convoyage muni de vanne désignée par la référence générale 3 et de pompe désignée par la référence générale 4, vers un réacteur d'hydrolyse désigné par la référence générale 10 permettant la production d'hydrogène désigné par la référence générale 6, à partir dudit XH₄ solide 2.

L'hydrogène formé 2 est ensuite extrait et transféré du réacteur vers une pile à combustible, de façon classique désignée par la référence générale 9, par exemple au moyen d'une pompe.

Le système peut comprendre un manomètre représenté par la référence générale 5 relié à la pompe 4 pour mesurer la pression de l'hydrogène formé et moduler le flux d'entrée du XH₄ solide.

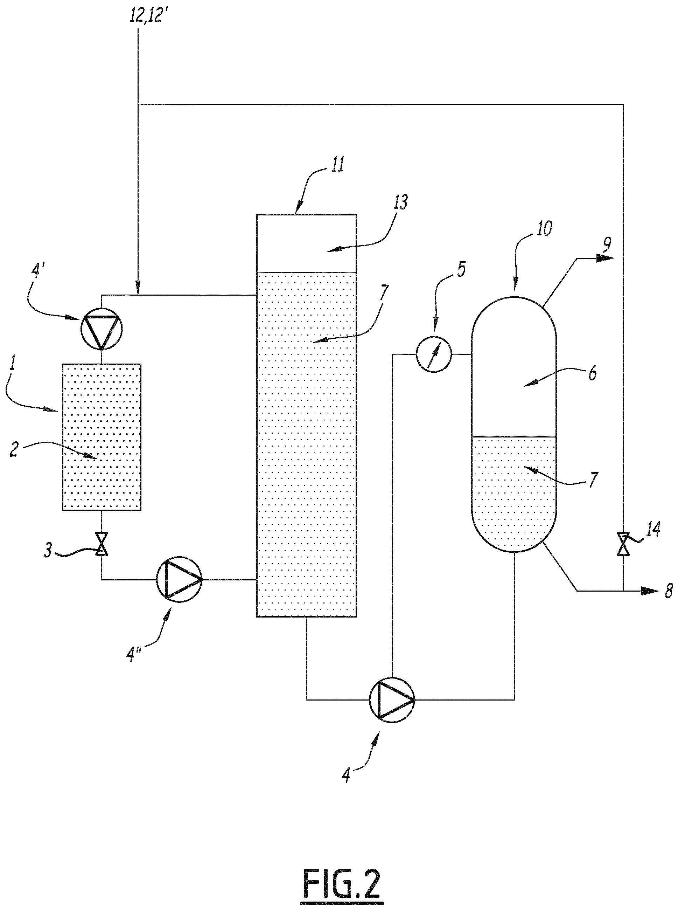

Le système de la figure 2 diffère de celui représenté à la figure 1 en ce qu'il comprend des moyens de dissolution du XH₄ solide 2, préalablement à l'introduction dans le réacteur 10. Cette configuration permet la mise en œuvre du second mode de réalisation du procédé selon l'invention.

Cette configuration comprend des moyens d'arrivée d'une solution aqueuse désignée par la référence générale 12 au XH₄ solide 2, et des moyens de circulation forcée de ladite solution aqueuse 7 entre un caisson de dissolution désigné par la référence générale 11 et le réservoir de stockage 1 de XH₄ solide 2, comme par exemple des pompes 4' et 4".

Ainsi, l'eau est ajoutée au XH₄ solide (2) et circule entre le réservoir 1 et le caisson de dissolution 11, de façon à former une solution aqueuse de XH₄ désignée par la référence générale 7.

A la sortie du caisson de dissolution 11, une pompe 4 permet d'extraire la solution aqueuse de XH₄ 7 et de la transférer vers le réacteur d'hydrolyse 10.

La solution aqueuse 12, typiquement de l'eau, peut provenir d'une alimentation telle qu'un réservoir de stockage et/ou peut provenir du recyclage de l'eau obtenue à l'issue de la réaction d'hydrolyse.

Typiquement le système fonctionne sous un flux d'azote, désigné par la référence générale 13.

## Revendications

1. Procédé de propulsion anaérobie (AIP) d'un engin sous-marin par production d'hydrogène (H₂) par hydrolyse d'un borohydrure ou d'un aluminohydrure XH₄, où X est choisi parmi KB, LiB, KAI, NaAI, LiAI ou NaB,
**caractérisé en ce que** la réserve de XH₄ embarquée est stockée sous forme solide.

2. Procédé selon la revendication 1 tel que ledit procédé comprend l'injection du XH₄ solide dans le réacteur d'hydrolyse.

3. Procédé selon la revendication 1 tel qu'il comprend :
- l'étape de dissolution du XH₄ solide dans une solution aqueuse de dissolution ; et
- l'étape d'injection de la solution aqueuse de XH₄ ainsi obtenue dans le réacteur d'hydrolyse.

4. Procédé selon la revendication 3 comprenant :
- la dissolution dans le ou les réservoirs de stockage de XH₄ solide, et/ou
- le convoyage de XH₄ solide vers un caisson de dissolution et la dissolution dans le dit caisson de dissolution,
la dissolution étant opérée par ajout de la solution aqueuse de dissolution.

5. Procédé selon l'une quelconque des revendications précédentes tel que le XH₄ est stocké sous forme de comprimés (« caplets »), granulés (« pellets ») ou poudre.

6. Procédé selon l'une quelconque des revendications précédentes tel que le XH₄ est stabilisé par une ou plusieurs bases.

7. Procédé selon la revendication 6 tel que la ou les bases sont présentes dans le XH₄ solide, dans la solution aqueuse de dissolution, et/ou dans la solution aqueuse de XH₄.

8. Procédé selon l'une quelconque des revendications 1, 3 à 6, comprenant l'étape initiale d'amorçage par dissolution de XH₄ solide par une solution aqueuse d'amorçage.

9. Procédé selon l'une quelconque des revendications 3 à 8 comprenant le recyclage de l'eau en excès pour l'alimentation de ladite solution aqueuse de dissolution.

10. Système de propulsion anaérobie embarqué d'un engin sous-marin par production d'hydrogène à partir de XH₄ solide comprenant :
- un réacteur (10) d'hydrolyse permettant la production d'hydrogène (6) à partir de XH₄,
- au moins un moyen (4) d'introduction de XH₄ dans ledit système de production d'hydrogène ;
- au moins un moyen (9) de transfert de l'hydrogène formé (6) vers une pile à combustible ;
**caractérisé en ce qu'**il comprend au moins un réservoir de stockage (1) de XH₄ solide (2).

11. Système selon la revendication 10 comprenant en outre :
- au moins un moyen d'ajout d'eau (12) au XH₄ solide (2),
- au moins un caisson de dissolution (11) permettant la dissolution de XH₄ solide (2) dans une solution (7);
- au moins un moyen (4', 4") de circulation forcée de la solution de XH4 (2) entre le réservoir de stockage (1) de XH4 solide et le caisson de dissolution (11),
- au moins un moyen (4) de transfert de ladite solution de XH₄ ainsi formée vers le réacteur d'hydrolyse.

12. Système selon la revendication 11 comprenant en outre :
- un réservoir d'une solution aqueuse d'amorçage (12') en amont d'une arrivée d'eau (12).

13. Système selon l'une quelconque des revendications 11 ou 12 comprenant des moyens de recyclage (14) de l'eau en excès de la réaction vers l'arrivée d'eau (12).
